(19) **Europäisches Patentamt / European Patent Office / Office européen des brevets**

(11) **EP 3 558 880 B1**

(12) **FASCICULE DE BREVET EUROPEEN**

(45) Date de publication et mention de la délivrance du brevet:
**07.08.2024 Bulletin 2024/32**

(21) Numéro de dépôt: **17838055.6**

(22) Date de dépôt: **24.12.2017**

(51) Classification Internationale des Brevets (IPC):
**C03B 18/02** *(2006.01)* **C03B 18/10** *(2006.01)*
**C03B 18/14** *(2006.01)*

(52) Classification Coopérative des Brevets (CPC):
**C03B 18/10; C03B 18/02; C03B 18/14**

(86) Numéro de dépôt international:
**PCT/FR2017/053843**

(87) Numéro de publication internationale:
**WO 2018/115801 (28.06.2018 Gazette 2018/26)**

(54) **PROCÉDÉ AMÉLIORÉ DE FABRICATION DE VERRE PLAT PAR FLOTTAGE**

VERBESSERTES VERFAHREN ZUR HERSTELLUNG VON FLACHGLAS DURCH FLOATING

IMPROVED METHOD FOR MANUFACTURING FLAT GLASS BY FLOATING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2016 FR 1663357**

(43) Date de publication de la demande:
**30.10.2019 Bulletin 2019/44**

(73) Titulaire: **SAINT-GOBAIN GLASS FRANCE**
**92400 Courbevoie (FR)**

(72) Inventeurs:
• **LEBOIS, Félix**
**8049 Zürich (CH)**
• **BOUILLET, Fabien**
**60200 Compiegne (FR)**

(74) Mandataire: **Saint-Gobain Recherche**
**B.P. 135**
**39, quai Lucien Lefranc**
**93303 Aubervilliers Cedex (FR)**

(56) Documents cités:
**EP-A2- 0 304 844    DE-A1- 102007 014 806**
**US-A1- 2010 206 009**

**Description**

La présente invention concerne un procédé de fabrication de verre plat par flottage d'un ruban de verre sur un bain de métal fondu.

La fabrication de verre plat par flottage d'un ruban de verre sur un bain de métal fondu - généralement de l'étain - est connue de longue date. Ce procédé a permis d'améliorer significativement la planéité du verre obtenu. Cependant, il laisse subsister des défauts de planéité à plus petite échelle de longueur d'onde entre 1 mm et 100 mm, en particulier sous forme de défauts d'ondulation ou de défauts dioptriques de la plaque de verre. Les défauts d'ondulation de la plaque de verre sont caractérisés par des profils des défauts de planéité des deux faces de la plaque de verre parallèles et n'entraînent donc pas de variations d'épaisseur à l'échelle de la longueur d'onde de ces défauts contrairement aux défauts dioptriques de la plaque de verre dont les profils de défaut de planéité sont symétriques par rapport au plan médian de la plaque de verre et entraînent des variations d'épaisseur à l'échelle de la longueur d'onde des défauts. Ces défauts de planéité rendent difficiles à satisfaire les exigences contemporaines de plus en plus élevées concernant la qualité optique de la plaque de verre dans le cas des défauts dioptriques, mais également des produits finaux comme les verres feuilletés automobiles pénalisés par les deux types de défaut et tout particulièrement par les défauts d'ondulation des deux plaques de verre composant le produit final. Ainsi, concernant les vitrages automobiles, la tendance consiste à limiter la vitesse d'entraînement du ruban de verre sur le bain de métal fondu afin de procurer la qualité optique souhaitée. Dans d'autres domaines tels que les écrans d'affichage à cristaux liquides ou encore les écrans d'affichage des téléphones intelligents (communément dénommés *smartphone*), il est même préféré recourir à d'autres procédés de fabrication du verre afin d'atteindre un niveau de qualité optique encore plus élevé malgré une productivité moindre de ces procédés.

Le but de la présente invention est d'améliorer le procédé de fabrication de verre plat par flottage sur un bain de métal fondu.

Plus particulièrement, comparé à l'art antérieur, un but de l'invention est de permettre la fabrication par flottage de verre plat présentant une meilleure qualité optique tout en entraînant le ruban de verre à une même vitesse sur le bain de métal fondu.

Formulé autrement, un but de l'invention est, comparé à l'art antérieur, de permettre la fabrication par flottage d'un verre plat présentant une même qualité optique, mais en permettant de recourir à une vitesse d'entraînement supérieure du ruban de verre sur le bain de métal fondu.

A cette fin, la présente invention propose un procédé de fabrication de verre plat par flottage d'un ruban de verre sur un bain de métal fondu, de préférence de l'étain fondu, dans lequel le ruban de verre est entraîné suivant une direction de déplacement longitudinal depuis un côté amont du bain où le verre fondu est coulé en continu sur le métal fondu jusqu'à un côté aval du bain où le ruban de verre figé quitte le bain, le procédé comprenant :

- soumettre le métal fondu à un champ magnétique à composante verticale et glissant dans la direction de déplacement longitudinal du ruban de verre lequel champ magnétique est appliqué à tout ou partie du métal fondu situé sous le ruban de verre dans une zone du bain pour laquelle le verre satisfait à la relation suivante :

$$10^{-3,5} \text{ Pa.m}^3.\text{s} < \mu.h^3 < 10^{-2} \text{ Pa.m}^3.\text{s}$$

avec :

- $\mu$: la viscosité du verre, et
- h : l'épaisseur du ruban de verre.

L'invention est basée sur le constat fait par les inventeurs que des turbulences existent dans le bain de métal fondu immédiatement sous le ruban de verre et que, dans la zone du bain de métal précitée, ces turbulences s'imprègnent à la surface du ruban de verre créant ainsi des défauts sous forme d'ondulations de la feuille de verre qui subsistent dans la feuille de verre obtenue. Bien que par définition les défauts d'ondulation n'entraînent pas de variations d'épaisseur de la feuille de verre, et donc pas de défaut optique en transmission à travers la feuille de verre, ils contribuent pour une part importante à dégrader la planéité des deux surfaces de la plaque de verre notamment pour les applications électronique comme le smartphone et la qualité optique des produits finaux comme les verres feuilletés automobiles où les défauts d'ondulation des deux plaques de verres vont s'ajouter pour dégrader la qualité optique en transmission du produit final. Sans vouloir être liée par une quelconque théorie, il semble que ces turbulences existant dans le métal fondu dans cette zone critique du bain soient liées à des variations de pression résultant de la convection forcée du ruban de verre, ainsi qu'aux efforts de cisaillement auxquels est soumis le métal fondu sous le ruban de verre en raison de la traction exercée sur le ruban de verre pour l'entraîner sur le bain de métal fondu. Au contraire, en dehors de cette zone critique, ces turbulences dans le bain de métal fondu sont moins préjudiciables car, en amont de la zone critique, la viscosité du ruban de verre est trop faible (liée à la température du ruban de verre plus élevée) pour que les ondulations subsistent de manière sensible à la surface du verre tandis que, en aval de la zone critique, le ruban de verre a une viscosité plus élevée (liée à la température du ruban de verre qui a diminuée) et y est suffisamment figé pour éviter que les turbulences existant dans le métal fondu ne puissent s'imprégner dans la surface du verre.

En pratique, la position de la zone critique est dépendante de plusieurs paramètres, notamment de la composition du verre, des conditions de formage du verre et de l'épaisseur du verre fabriqué. Mais il est possible de délimiter cette zone critique en recourant à la quantité $\mu.h^3$ qui est directement liée au temps caractéristique de déformation du verre en réponse à une sollicitation mécanique. Elle permet de quantifier la susceptibilité du verre à se déformer sous l'effet d'une charge, à savoir en l'occurrence les sollicitations mécaniques du verre par le métal fondu en raison des variations locales de pression dans le bain de métal à l'interface verre/métal, aussi communément appelés forçage en pression.

En conséquence, l'invention propose de réduire, voire de supprimer les turbulences dans le métal fondu à l'interface avec le ruban de verre en soumettant le métal fondu sous le ruban de verre dans cette zone critique, ou au moins pour une partie de celle-ci, à un champ magnétique glissant tel que défini plus haut. Le champ magnétique glissant va induire des courants électriques dans le métal fondu lesquels sont soumis au champ magnétique glissant, ce qui a pour effet de créer des forces de Lorentz s'exerçant de manière volumique sur le métal fondu. Ces forces de Lorentz sollicitent le métal fondu dans la direction de glissement du champ magnétique qui est choisi identique à la direction de déplacement longitudinal du ruban de verre. De la sorte, le cisaillement à l'interface entre le ruban de verre et le métal fondu dans la zone d'application du champ magnétique peut être réduit, voire supprimé. Par conséquent, les variations de pression à cette interface qui résultent du cisaillement sont réduites ou supprimées également, ce qui limite, voire supprime l'impression d'ondulations dans le ruban de verre dans la zone critique. L'on comprendra que le champ magnétique est avantageusement choisi notamment en ce qui concerne son intensité et sa vitesse de glissement dans la direction de déplacement longitudinal du ruban de verre de manière à réduire ou supprimer les turbulences dans le métal fondu à l'interface avec le ruban de verre dans la zone d'application du champ magnétique.

L'on remarquera que dans le domaine de la fabrication de verre flotté, il est connu de l'art antérieur d'appliquer des champs magnétiques au métal fondu du bain sur lequel le ruban de verre est déplacé. C'est le cas par exemple de EP 304 844 A2 qui cherche une solution permettant de raccourcir le bain de métal fondu afin de limiter les pertes de chaleur alors que le raccourcissement du bain de métal a pour inconvénient d'engendrer de forts courants de convection naturelle dans le bain de métal, et que d'autre part le fait de placer une barrière dans le bain de métal pour séparer le bain en une région amont et une région avale conduit aussi à un gradient thermique axial très important et en conséquence à de forts courants de convection naturelle spiralaires au niveau de la barrière qui aboutissent à des distorsions dans le verre fabriqué sous forme de crêtes et de creux sous forme de bandes. A cette fin, il enseigne d'appliquer non pas un champ magnétique glissant, mais un champ magnétique généré par un courant continu ou un aimant permanent qui soit capable de supprimer localement le mouvement du bain de métal fondu - créant ainsi une barrière de métal fondu figé - de sorte que les transferts de chaleur aient lieu par conduction et rayonnement, et donc sans changement local de température, ce qui évite que les distorsions précitées ne se forment dans le ruban de verre. Il enseigne par ailleurs d'appliquer, dans une zone amont où le verre a une viscosité encore très faible, un champ magnétique glissant en direction de l'aval du bain de métal fondu pour modifier l'épaisseur du bain de métal fondu de manière à être supérieure en aval par rapport à l'amont, et de ce fait contrôler l'épaisseur du ruban de verre fabriqué. Il enseigne encore d'appliquer à l'extrémité aval du bain de métal fondu un champ magnétique glissant en direction de l'amont du bain pour solliciter le métal fondu vers l'amont et ce faisant empêcher le métal fondu de déborder à la sortie du bain qui est plus bas que la surface du bain.

US 2010/206009 A1 décrit aussi d'utiliser un moteur linéaire à la sortie du bain pour solliciter et déplacer le métal fondu vers l'amont par application au métal fondu d'un champ magnétique qui se déplace.

DE 10 2007 014 806 A1 enseigne d'appliquer un champ magnétique variable au métal fondu du bain pour fabriquer du verre flotté à l'aide d'un cylindre, d'un disque ou d'une bande sans fin sur lequel sont placés en alternance des aimants permanents ayant des pôles contraires. Le dispositif est entraîné en mouvement relatif par rapport au bain pour créer le champ magnétique variable et ce faisant, influer sur le bain de métal afin d'étaler et mettre en forme le ruban de verre du côté amont du bain, ou encore afin d'influer sur les caractéristiques optiques du verre, plus particulièrement sur les variations d'épaisseur du ruban de verre, c'est-à-dire les défauts dioptriques mentionnés plus hauts.

Aucun de ces documents ne traite, ni ne mentionne les problèmes engendrés par la convection forcée dans le bain de métal fondu liée à l'entrainement du ruban de verre, ainsi que des variations de pression qu'elle engendre dans le métal fondu sous le ruban de verre, ni des efforts de cisaillement auxquels est soumis le métal fondu sous le ruban de verre, ni plus généralement du problème des ondulations du verre qui dégradent sa qualité optique même dans le cas où l'épaisseur de verre est constant. Et ils n'enseignent pas non plus d'utiliser un champ magnétique glissant dans la direction de déplacement longitudinal du ruban de verre pour réduire, voire de supprimer les turbulences, en particulier ceux causées par l'entraînement du verre, dans le métal fondu à l'interface avec le ruban de verre, ni de

**EP 3 558 880 B1**

l'appliquer dans la zone critique précitée, aux fins d'améliorer les qualités optiques du verre fabriqué. De surcroît, le dispositif de DE 10 2007 014 806 A1 ne permettrait pas de générer un champ magnétique d'intensité suffisante, ou bien défilant avec une vitesse suffisante pour procurer l'effet recherché dans le cadre de la présente demande de brevet.

Suivant des modes de réalisation préférés, l'invention comprend une ou plusieurs des caractéristiques suivantes :

- le champ magnétique est choisi de manière à réduire ou supprimer les turbulences dans le métal fondu à l'interface avec le ruban de verre dans la zone d'application du champ magnétique ;
- le champ magnétique est choisi de manière à ce que, pour au moins une partie de l'épaisseur du métal fondu située immédiatement sous le ruban de verre dans la zone d'application du champ magnétique, le métal fondu soit entraîné dans la direction de déplacement longitudinale du ruban de verre à la même vitesse que le ruban de verre ;
- ladite partie de l'épaisseur du métal fondu située immédiatement sous le ruban de verre dans la zone d'application du champ magnétique correspond à au moins 5%, plus préférentiellement à au moins 15%, plus préférentiellement encore à au moins 25%, plus préférentiellement encore à au moins 33%, plus préférentiellement encore à au moins 50%, plus préférentiellement encore à au moins 66%, et plus avantageusement encore à au moins 75% de l'épaisseur totale de métal fondu sous le ruban de verre dans la zone d'application du champ magnétique ;
- soumettre le métal fondu audit champ magnétique sur au moins 15%, plus préférentiellement sur au moins 25%, encore plus préférentiellement sur au moins 33%, plus préférentiellement encore sur au moins 50%, plus préférentiellement encore sur au moins 75% et plus avantageusement encore sur 100% de la longueur de ladite zone du bain mesurée dans la direction de déplacement longitudinal du ruban de verre ;
- soumettre le métal fondu audit champ magnétique sur toute la largeur du ruban de verre ;
- soumettre le métal fondu audit champ magnétique sur au moins toute la largeur du ruban du verre sans y soumettre le métal fondu dans une région contiguë au bord latéral du bain de chaque côté du ruban de verre ;
- faire glisser le champ magnétique dans la direction de déplacement longitudinal avec une vitesse de glissement qui est sensiblement égale à la vitesse de déplacement longitudinal du ruban de verre ;
- dans le cas précédent, choisir en outre l'intensité du champ magnétique de manière à entraîner le métal fondu dans la direction de déplacement longitudinal à la vitesse de déplacement longitudinal du ruban de verre pour au moins 5%, plus préférentiellement pour au moins 15%, plus préférentiellement encore pour au moins 25%, plus préférentiellement encore pour au moins 33%, plus préférentiellement encore pour au moins 50%, plus préférentiellement encore pour au moins 66 % et plus préférentiellement encore pour au moins 75% de l'épaisseur de métal fondu situé immédiatement sous le ruban de verre dans la zone d'application du champ magnétique ;
- accélérer le refroidissement du ruban de verre dans la zone d'application du champ magnétique ;
- faire glisser le champ magnétique dans la direction de déplacement longitudinal avec une vitesse de glissement sensiblement supérieure à la vitesse de déplacement longitudinal du ruban de verre, la vitesse de glissement étant de préférence choisie au moins 5 fois supérieure, plus préférentiellement au moins 10 fois supérieure, plus préférentiellement au moins 50 fois supérieure et plus préférentiellement encore au moins 100 fois supérieure à la vitesse de déplacement longitudinal (V) du ruban de verre (8) ;
- dans ce derniers cas, choisir en outre la vitesse de glissement du champ magnétique dans la direction de déplacement longitudinal et l'intensité du champ magnétique pour que, dans la zone d'application du champ magnétique, le métal fondu soit déplacé dans la direction de déplacement longitudinal sensiblement à la vitesse de déplacement longitudinal du ruban de verre pour au moins 5% de l'épaisseur de métal fondu situé immédiatement sous le ruban de verre ;
- choisir la vitesse de glissement du champ magnétique dans la direction de déplacement longitudinal et l'intensité du champ magnétique pour que, dans la zone d'application du champ magnétique, le métal fondu soit déplacé dans la direction de déplacement longitudinal à une vitesse inférieure ou égale à la vitesse de déplacement longitudinal du ruban de verre pour toute la profondeur du bain de métal fondu ;
- fixer la fréquence du champ magnétique de manière à ce que l'épaisseur de peau magnétique soit au moins égale à au moins 5%, plus préférentiellement à au moins 15%, plus préférentiellement encore à au moins 25%, plus préférentiellement encore à au moins 33%, plus préférentiellement encore à au moins 50% et plus avantageusement encore à 75% de la profondeur du bain de métal fondu dans la zone d'application du champ magnétique, en veillant préférentiellement à ce qu'elle soit inférieure ou égale à 200% et plus préférentiellement inférieure ou égale à 120%, voire plus avantageusement encore inférieure ou égale à 100 % ;
- maintenir constante la vitesse de glissement du champ magnétique dans la direction de déplacement longitudinal pendant l'étape de soumission du métal fondu au champ magnétique ;
- maintenir constante la valeur efficace de l'intensité du champ magnétique pendant l'étape de soumission du métal fondu au champ magnétique ;
- générer le champ magnétique au moyen d'un dispositif électromagnétique ;
- disposer le dispositif électromagnétique au-dessus du bain de métal fondu pendant l'étape de soumission du métal fondu au champ magnétique ;
- maintenir le dispositif électromagnétique dans une position fixe par rapport au bain de métal fondu pendant l'étape de soumission du métal fondu au champ magnétique ;
- le dispositif électromagnétique comprend un ou plusieurs moteurs linéaires maintenus dans une position fixe par rapport au bain de métal fondu pendant l'étape de soumission du métal fondu au champ magnétique ;
- générer le champ magnétique au moyen d'un dispositif électromagnétique comprenant un moteur linéaire ou plusieurs moteurs linéaires placés côte à côte suivant la direction de déplacement longitudinal et/ou perpendiculairement à cette dernière de manière à réaliser un pavage de la zone du bain à soumettre au champ magnétique, les moteurs linéaires étant synchronisés de manière à se comporter comme un unique moteur linéaire.

L'invention est particulièrement adaptée à la fabrication de verre plat d'épaisseur inférieure ou égale à 3 mm car c'est pour celui-ci que les turbulences à la surface du métal fondu ont le plus tendance à imprimer définitivement des ondulations dans la surface du verre. Mais il est préférable que le verre plat fabriqué ait une épaisseur d'au moins 0,5 mm. Par ailleurs, l'invention est tout particulièrement adaptée à la fabrication industrielle de verre plat avec une vitesse de déplacement longitudinal du ruban de verre sur le bain de métal fondu qui est supérieure ou égale à 10 m/min. Mais il est préférable que la vitesse soit inférieure ou égale à 30 m/min. Plus généralement, elle peut aussi être mise en oeuvre dans le cadre de fabrication particulière où une vitesse de déplacement longitudinal du ruban de verre sur le bain de métal fondu plus faible est utilisée. Ainsi, le procédé de l'invention peut aussi être utilisé pour des vitesses à partir de 1 m/min par exemple. Par ailleurs, dans la zone d'application du champ magnétique, la profondeur du bain de métal fondu peut, selon l'application, être très différente et être comprise par exemple dans l'intervalle allant de 5 mm à 500 mm, mais elle est plus préférentiellement comprise dans l'intervalle de 10 mm à 200 mm, et plus préférentiellement de 50 mm à 100 mm.

Plus généralement, dans un procédé de fabrication de verre plat par flottage d'un ruban de verre sur un bain de métal fondu, de préférence de l'étain fondu, dans lequel le ruban de verre est entraîné suivant une direction de déplacement longitudinal depuis un côté amont du bain où le verre fondu est coulé en continu sur le métal fondu jusqu'à un côté aval du bain où le ruban de verre figé quitte le bain, l'invention propose d'utiliser un champ magnétique glissant dans la direction de déplacement longitudinal du ruban de verre pour réduire ou supprimer les turbulences dans le métal fondu à l'interface avec le ruban de verre dans la zone d'application du champ magnétique ou encore pour réduire ou supprimer les défauts d'ondulation dans le verre obtenu.

D'autres caractéristiques et avantages de l'invention apparaîtront à la lecture de la description qui suit d'un mode de réalisation préféré de l'invention, donnée à titre d'exemple et en référence au dessin annexé.

La figure 1 est une représentation schématique d'une installation de fabrication de verre plat par flottage qui est prévue pour mettre en oeuvre un procédé selon un mode de réalisation préféré de l'invention.
La figure 2 est une représentation schématique d'une vue en coupe suivant les flèches A-A à travers l'installation représentée à la figure 1.
La figure 3 est une représentation schématique agrandie de la zone D identifiée sur la figure 2.
Les figures 4 et 5 illustrent schématiquement l'allure de la répartition de la vitesse de déplacement du métal fondu sous le ruban de verre pour une autre mise en oeuvre respective du procédé selon l'invention.

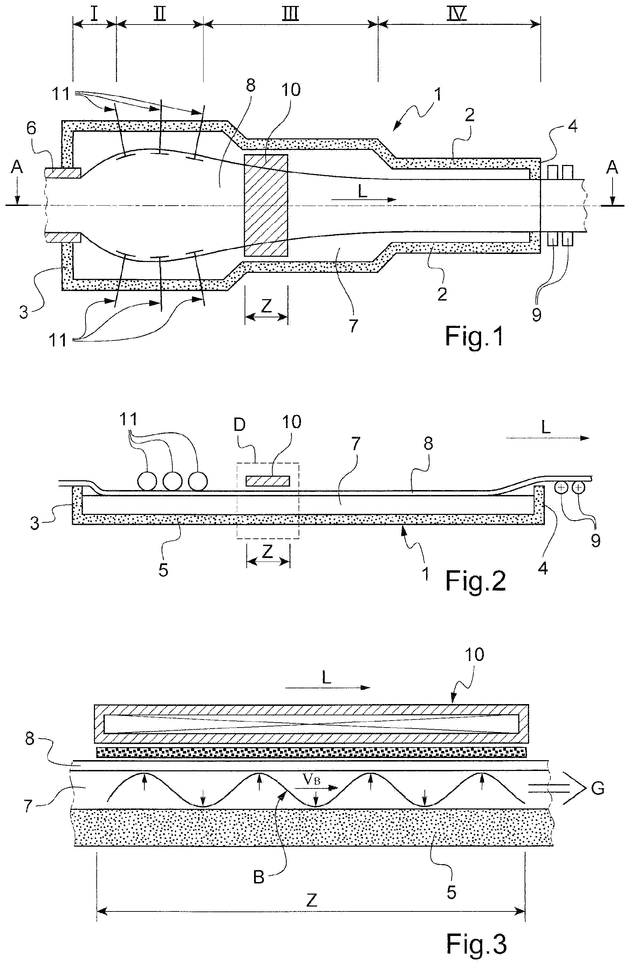

Comme cela est visible sur la figure 1, l'installation comprend une cuve 1 munie de parois latérales 2 et de parois d'extrémités 3 et 4, respectivement à l'entrée et à la sortie de la cuve 1. La cuve 1 contient un bain d'étain en fusion, ou de tout autre métal en fusion approprié, référencé 7. Le verre fondu est déversé sur le bain de métal en fusion 7 à son entrée, à partir d'un canal de distribution 6 se finissant par une lèvre de coulée et disposé au-dessus de la paroi d'entrée 3 de la cuve 1. Le ruban de verre 8 qui se forme sur le bain de métal en fusion 7 est entraîné en continu à vitesse constante suivant une direction de déplacement longitudinale L depuis l'entrée de la cuve - c'est-à-dire le côté amont du bain - jusqu'à sa sortie - c'est-à-dire le côté aval du bain - par des rouleaux extracteurs 9 placés à l'extérieur de la cuve 1 du côté aval.

Du point de vue du verre, le bain 7 définit plusieurs zones successives en suivant la direction de déplacement longitudinal L du ruban de verre 8. Après avoir été déversé sur le bain de métal fondu 7, le verre s'étale librement au maximum sur le bain dans une première zone I. Il se forme ainsi un ruban de verre 8 qui se déplace vers l'aval sous l'effet de la traction des rouleaux extracteurs 9.

Puis dans une deuxième zone II, le ruban de verre en formation subit des forces longitudinales et dirigées vers l'extérieur sous les actions combinées de rouleaux extracteurs 9 et de rouleaux de bords moletés 11. Les rouleaux de bord moletés 11 sont généralement en acier et légèrement obliques par rapport à la direction de déplacement longitudinal L du ruban de verre 8. Ils sont entraînés par des moteurs 16 généralement à des vitesses différentes selon leur position, et croissantes vers l'aval. Dans cette deuxième zone II, l'étirage du verre commence et celui-ci s'amincit. Dans une troisième zone III, le ruban de verre prend sa forme définitive sous l'action des rouleaux extracteurs 9 l'entraînant en direction de la sortie du bain.

Les deuxième et troisième zones II, III forment ensemble la zone d'étirage qui est suivie par une quatrième zone IV, dite de consolidation, où le ruban de verre figé se refroidit progressivement.

L'installation comprend en outre un dispositif électromagnétique 10 placé au-dessus du ruban de verre 8. Il est disposé au-dessus de la zone critique Z du bain pour laquelle le verre du ruban satisfait à la relation :

$$10^{-3,5} \text{ Pa.m}^3.\text{s} < \mu h^3 < 10^{-2} \text{ Pa.m}^3.\text{s}$$

avec:

- $\mu$: la viscosité du verre exprimé en Pa.s, et
- h : l'épaisseur du ruban de verre à l'endroit considéré exprimé en mètre.

A titre d'exemple, dans le cas d'un verre ayant une épaisseur de 2,1 mm, la zone critique correspond à une viscosité comprise entre $10^4$ Pa.s et $10^6$ Pa.s, ce qui correspond, s'agissant d'un verre sodocalcique, à une température du verre comprise entre 750°C et 900°C.

En pratique, on pourra identifier la portion longitudinale du bain de métal fondu 7 correspondant à la zone critique Z de manière indirecte grâce aux températures correspondantes du métal fondu 7. En effet, dans cette plage de viscosités, la relation entre la viscosité et la température suit une loi de Vogel-Fulcher-Tammann (VFT) dont les coefficients pourront être ajustés par deux mesures ou plus de viscosités du verre concerné qui sont réparties dans la plage de viscosité en question, en recourant à une mesure sur fibre pour le point de Littleton (telle définie par la norme ISO 7884-6 :1987) et à un viscosimètre de Couette pour les viscosités plus faibles.

Le dispositif électromagnétique 10 est prévu pour générer un champ magnétique B à composante verticale dans la zone critique Z du bain de métal fondu 7. Le dispositif électromagnétique 10 est préférentiellement agencé de manière à ce que les lignes de champ du champ magnétiques B soient contenues dans des plans verticaux et parallèles à la direction de déplacement L. Le champ B, symbolisé sur la figure 3, est glissant dans une direction G qui correspond à la direction de déplacement longitudinal L du ruban de verre 8 de manière à ce que les forces volumiques de Lorentz engendrées par le champ magnétiques sollicitent le métal fondu 7 dans ce même sens. Il est préférable cependant que l'intensité du champ B soit limitée de manière à ce que les forces volumiques de Lorentz n'entraînent pas le métal fondu 7 sous le ruban de verre 8 dans la direction de déplacement L à une vitesse supérieure à celle du ruban de verre 8. Le champ B est appliqué de préférence continuellement dans la zone critique Z du bain pendant que le ruban de verre 8 est entraîné en continu sur le bain de métal fondu 7 par les rouleaux extracteurs 9.

Le dispositif électromagnétique 10 peut être mise en oeuvre sous la forme d'un moteur linéaire, par exemple un moteur linéaire triphasé. En variante, il peut être mis en oeuvre au moyen de plusieurs moteurs linéaires placés côte à côte suivant la direction de déplacement longitudinal L et/ou perpendiculairement à cette dernière de manière à réaliser un pavage de la zone du bain à soumettre au champ B. Dans ce cas, les moteurs linéaires sont synchronisés de manière à se comporter comme un unique moteur linéaire, et donc éviter notamment une rupture dans le glissement du champ magnétique B.

Le dispositif électromagnétique 10, notamment dans le cas où il est mis en oeuvre par un ou plusieurs moteurs linéaires, est de préférence supporté par un portique. Il est avantageux que ce portique soit déplaçable par rapport au bain de métal fondu 7 dans la direction de déplacement longitudinal L, ce qui permet de placer le dispositif électromagnétique de niveau de la zone critique Z dont la localisation dans cette direction peut varier par exemple si on choisit de produire un verre d'épaisseur différente. En revanche, au cours de la fabrication d'un verre donné, le dispositif électromagnétique 10, notamment s'il est mis en oeuvre par un ou plusieurs moteurs linéaires, est préférentiellement maintenu dans une position fixe par rapport au bain de métal fondu 7, ce qui évite de perturber l'application du champ glissant B relativement au bain de métal fondu 7.

Il est préférable que le métal fondu soit soumis au champ B sur toute la largeur du ruban de verre 8 afin que le métal fondu 7 soit soumis aux forces volumiques de Lorentz sous toute la largeur du ruban de verre 8. Similairement, il est préférable que le champ B soit sensiblement homogène dans la direction latérale - c'est-à-dire la direction perpendiculaire à la direction de déplacement longitudinal L -, autrement dit que le champ B ait la même intensité en tout point du métal fondu à une profondeur donnée contenue dans une même section du bain de métal fondu 7 perpendiculaire à la direction de déplacement L. De la sorte, les forces volumiques de Lorentz exercées sur le métal fondu 7 sont identiques en tout point à une profondeur donnée d'une section du bain de métal fondu 7. Ces mesures contribuent à prévenir la création de turbulences dans l'écoulement du métal fondu 7.

Par ailleurs, il est préférable que le champ B ne soit pas appliqué en direction latérale sur toute la largeur du bain de métal fondu 7, mais qu'il s'arrête à un niveau latéral qui soit intermédiaire entre le ruban de verre 8 et les parois 2 de la cuve 1. De la sorte, les lignes de courants électriques induits par le champ B dans le métal fondu 7 - lesquelles lignes sont perpendiculaires à la direction de déplacement longitudinal L sous le ruban de verre 8 - peuvent reboucler de manière horizontale dans la région latérale du bain de métal fondu 7 comprise entre le ruban de verre 8 et les parois 2 de la cuve 1. Cette mesure limite favorablement le risque de générer des turbulences préjudiciables dues aux forces de Lorentz dans le métal fondu 7 au niveau des zones latérales du ruban de verre 8, comparativement au cas où les lignes de courants reboucleraient de manière verticale dans la région latérale du bain de métal fondu 7 si le champ B s'étendait sur toute la largeur du bain de métal fondu 7, c'est-à-dire jusqu'aux parois 2.

L'application du champ B au bain de métal fondu 7 pour tout ou partie de la longueur de la zone critique Z procure une amélioration de la qualité optique du verre obtenu pour une vitesse d'entraînement donnée du ruban de verre 8 ou, en variante, permet d'augmenter dans une certaine mesure la vitesse d'entraînement du ruban de verre 8 sans détériorer la qualité optique du verre obtenu. Plus grande est la partie de la longueur de la zone critique Z pour laquelle le métal fondu 7 est soumise au champ B, plus le gain en termes de qualité optique du verre et/ou de vitesse d'entraînement du ruban de verre 8 est important. De ce point de vue, il est préférable que le champ B soit appliqué au métal fondu 7 sur au moins 15 %, plus préférentiellement sur au moins 25 %, plus préférentiellement encore sur au moins 33%, voire au moins 50%, et encore plus préférentiellement sur au moins 75%, et plus avantageusement encore sur 100% de la longueur de la zone critique Z. En pratique, la portion de longueur de la zone critique Z à couvrir dépend de la qualité optique à obtenir pour le verre. En effet, il a été constaté que l'impression des défauts optiques dans le verre se faisait dans des sous-zones de longueur plus limitée à l'intérieur de la zone critique Z qui sont différentes selon la taille des défauts optiques considérés. L'emplacement des sous-zones en fonction de la taille des défauts optiques peut être déterminé par simulation numérique ou expérimentalement, par exemple en comparant la qualité optique du verre obtenu avec et sans application d'un champ B tel que décrit sur une longueur limitée de la zone critique Z.

Il est préférable que le fond ou sole 5 de la cuve 1 soit plat au moins dans toute la zone critique Z - voire plus préférentiellement aussi pour toute la partie amont de la cuve 1 afin d'éviter de créer des turbulences dans le métal fondu 7 dans la zone critique Z que créeraient sinon les obstacles dans la cuve 1.

Suivant une mise en oeuvre particulièrement avantageuse, le champ B est défini de manière à ce que, sous le ruban de verre 8 dans la zone d'application du champ B, le métal fondu 7 soit entraîné dans la direction de déplacement longitudinal L à la même vitesse que le ruban de verre 8. De la sorte, le cisaillement du métal fondu 7 est quasi-inexistant à l'interface du métal fondu 7 avec le ruban de verre 8 puisqu'ils se déplacent à la même vitesse. Par voie de conséquence, les turbulences dans le métal fondu à cette interface sont sensiblement supprimées et donc aussi les défauts corrélatifs qui s'imprimaient de leur fait dans la surface du verre.

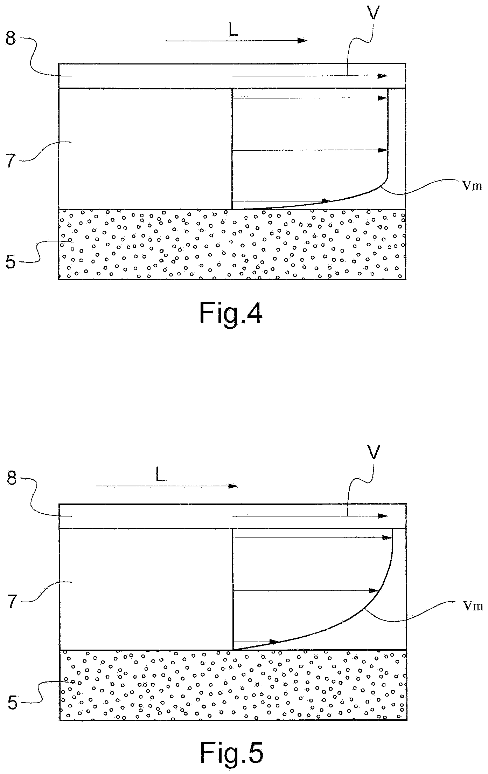

De manière optimale, il est préférable que le métal fondu 7 soit ainsi entraîné sous le ruban de verre 8 sur toute la profondeur du bain de manière à ne laisser subsister qu'une couche de métal fondu 7 d'épaisseur limitée - dite couche de Hartmann - à l'interface avec la sole 5 de la cuve qui s'écoule de manière laminaire. La figure 4 illustre schématiquement cette situation avec V représentant la vitesse de déplacement du ruban de verre 8 dans la direction L et $v_m$ représentant la vitesse de déplacement du métal fondu 7 dans la direction L en fonction de la profondeur du bain.

A cette fin, la vitesse $V_B$ de glissement du champ B dans la direction de déplacement longitudinal L est choisie égale à la vitesse V d'entraînement du ruban de verre 8 dans cette même direction et la valeur efficace du champ B est choisie suffisamment élevée pour que les forces volumiques de Lorentz soient suffisantes pour procurer l'effet d'entraînement précité du métal fondu 7. En pratique, il est possible de se contenter d'entraîner le métal fondu 7 sur une profondeur moindre tout en procurant une amélioration de la qualité optique qui est recherchée. Cependant, il est avantageux que les forces de Lorentz soient suffisantes pour entrainer à la vitesse d'entrainement du ruban de verre 8 dans la direction L au moins 5%, plus préférentiellement encore au moins 15%, plus préférentiellement au moins 25%, plus préférentiellement encore au moins 33%, plus préférentiellement encore au moins 50%, plus préférentiellement encore au moins 66%, voire plus préférentiellement encore au moins 75% de l'épaisseur totale de métal fondu 7 immédiatement sous le ruban de verre 8 dans la zone d'application du champ B.

Pour cela, la fréquence 'f' du champ B - et donc du courant électrique d'excitation du ou des moteurs linéaires - est choisie de manière à ce que le champ B se déplace à la vitesse du verre, compte tenu du dimensionnement du ou des moteurs linéaires. Autrement dit, la fréquence 'f est donnée par la formule suivante :

$$f = V_B . p / L$$

avec :

- f : la fréquence du champ B,
- $V_B$ : la vitesse de glissement du champ magnétique qui est, dans cette mise en oeuvre, définie comme étant égale à la vitesse V d'entraînement du ruban de verre 8 dans la direction de déplacement longitudinal L,
- p : le nombre total de paires de pôles par phase du moteur linéaire, et
- L : la longueur du moteur linéaire mesurée dans la direction de déplacement longitudinal L.

La force volumique de Lorentz s'exprime de la manière suivante dans ce mode de fonctionnement où la vitesse $V_B$ de glissement du champ magnétique est de l'ordre de grandeur de la vitesse d'entraînement du verre :

$$f_L = \sigma B^2 (V_B - v_m)$$

avec :

- $V_B$ est la vitesse de glissement du champ B dans la direction L, et
- $v_m$: la vitesse de déplacement du métal du bain dans la direction L.

Autrement dit, cette force volumique caractérise une interaction magnétohydrodynamique puisque liée à la vitesse de déplacement du métal. Pour cette raison, ce premier mode de fonctionnement peut être dénommé mode de fonctionnement 'magnétohydrodynamique' ou mode de fonctionnement 'MHD'.

Concernant l'intensité du champ B, les simulations ont permis d'établir que pour une vitesse V du ruban de verre 8 de 14 m/min et une profondeur du bain de métal fondu 7 de 6,4 cm, un champ de valeur efficace de 0,05 T est suffisant dans le cas où le métal fondu 7 est de l'étain.

Cette valeur du champ B peut être extrapolée à d'autres profondeurs d'étain et d'autres vitesses de verre, ainsi que pour d'autres métaux en utilisant le paramètre d'interaction suivant :

$$N = \frac{\sigma B^2 h}{\rho V}$$

avec :

- B: le module du champ magnétique ;
- $\sigma$ : la conductivité du métal fondu ;
- $\rho$ : la densité du métal fondu ;
- V : la vitesse d'entraînement du ruban de verre 8 dans la direction de déplacement longitudinal L ;
- h : la profondeur du bain de métal fondu dans la zone d'application du champ B.

Le paramètre d'interaction N permet de rapporter les effets des forces de Lorentz sur le métal fondu 7 à ceux de l'inertie du métal fondu 7. Si idéalement le paramètre d'interaction N peut être choisi égal à 1, les simulations numériques ont montré qu'il est possible de le fixer de manière satisfaisante à une valeur inférieure. Néanmoins, il est préférable qu'il soit choisi supérieur ou égal à 0,1, plus préférentiellement supérieur ou égal à 0,33, encore plus préférentiellement supérieur ou égal à 0,5, et plus préférentiellement supérieur à 0,75.

Enfin, dans cette mise en oeuvre, il peut être prévu d'appliquer un refroidissement forcé au ruban de verre 8 dans la zone d'application du champ B de manière à raccourcir la zone critique Z. Cela permet de réduire la longueur du dispositif électromagnétique 10. Cela peut être réalisé au moyen de refroidisseur, par exemple à eau ou à huile, interposé entre le dispositif électromagnétique 10 et le ruban de verre 8.

Suivant une autre mise en oeuvre, la vitesse de glissement du champ B dans la direction L est choisie notablement supérieure à la vitesse d'entraînement du ruban de verre 8 dans cette même direction, à savoir préférentiellement au moins 5 fois supérieure, plus préférentiellement au moins 10 fois supérieure, plus préférentiellement au moins 50 fois supérieure et plus préférentiellement encore au moins 100 fois supérieure. Cette autre mise en oeuvre est intéressante dans le cas où la mise en oeuvre du dispositif électromagnétique 10 est délicate pour atteindre la fréquence souhaitable du champ B dans la mise en oeuvre décrite précédemment.

Dans ce cas, bien que l'écoulement du métal fondu 7 à l'interface avec le ruban de verre 8 reste turbulent, les fluctuations de pression à cette interface peuvent être significativement réduites grâce aux forces volumiques de Lorentz sollicitant le métal fondu 7 dans la direction de déplacement L du ruban de verre 8 et limitant de ce fait le cisaillement du métal fondu 7 à l'interface avec le ruban de verre 8.

Lorsque la vitesse de glissement $V_B$ du champ magnétique est au moins un ordre de grandeur supérieure à la vitesse d'entraînement V du verre, la force volumique de Lorentz exercée sur le métal fondu 7 est alors liée seulement à la vitesse de glissement du champ B dans la direction L, à son intensité et à la conductivité du métal fondu 7 selon la formule :

$$F_B = \sigma B_e^2 V_B$$

avec :

- $F_B$ : la force volumique de Lorentz exercée sur le métal fondu,
- $\sigma$ : la conductivité du métal fondu 7,
- $B_e$ : la valeur efficace du champ magnétique B,
- $V_B$ : la vitesse de glissement du champ magnétique.

Dans ce cas, l'expression de la force volumique de Lorentz est purement inductive et ne dépend pas de la vitesse d'écoulement de l'étain $v_M$. Pour cette raison, ce mode de fonctionnement peut être dénommé mode de fonctionnement 'inductif puisque indépendant de la vitesse d'écoulement du métal fondu. Le paramètre d'interaction N s'exprime différemment que pour le mode de fonctionnement magnétohydrodynamique, à savoir de la manière suivante :

$$N = \frac{\sigma B_e^2 V_B h}{\rho V^2}$$

Il est avantageux que les forces volumiques de Lorentz s'exerçant sur le métal fondu 7 soient suffisantes pour que, pour une partie de l'épaisseur de métal fondu 7 située immédiatement sous le ruban de verre 8, la vitesse de déplacement du métal fondu 7 dans la direction L soit sensiblement égale à la vitesse d'entraînement du ruban de verre dans la direction L. La figure 5 illustre schématiquement cette situation avec V représentant la vitesse de déplacement du ruban de verre 8 dans la direction L et $v_M$ représentant la vitesse de déplacement du métal fondu 7 dans la direction L en fonction de la profondeur du bain. Pour cela, la vitesse $V_B$ du champ B et la valeur efficace de son intensité $B_e$ sont choisies de manière à obtenir une force volumique de Lorentz suffisante pour compenser la contrainte de friction exercée à l'interface entre le métal fondu 7 et la sole 5 de la cuve 1. En d'autres termes, la force volumique de Lorentz $F_B$ est préférentiellement choisie sensiblement égale à $\tau_w/h$, avec '$\tau_w$' la contrainte de friction exercée par la sole 5 sur le métal fondu 7 et 'h' la profondeur du bain de métal fondu 7 dans la zone d'application du champ B.

En pratique, pour une vitesse de déplacement du ruban de verre V = 14 m/min et une profondeur du bain d'étain de 6,4 cm dans la zone d'application du champ B, les simulations numériques montrent un effet bénéfique pour une force $F_B$ comprise entre 5 N.m$^{-3}$ et 10 N.m$^{-3}$. Si idéalement le paramètre d'interaction N peut être choisi entre 0,001 et 0,002, les simulations numériques ont montré qu'un effet sur la qualité optique est obtenu pour une valeur de N comprise entre 0,0005 et 0,004.

Cette valeur peut être extrapolée par l'homme du métier pour d'autres vitesses de déplacement du ruban de verre 8 et d'autres profondeurs du bain d'étain, et aussi au vu de la littérature existante fournissant des valeurs tabulées de la contrainte de friction $\tau_w$ pour un écoulement de type Couette plan - qui est proche de la situation du bain de métal fondu 7 - pour le cas d'autres métaux fondus que l'étain en fonction de la vitesse d'entraînement et de l'épaisseur de l'écoulement.

Il est préférable que la fréquence du champ B soit fixée à une valeur suffisamment élevée de manière à ce que les pulsations des forces de Lorentz soient trop rapides pour créer des turbulences dans le bain de métal fondu 7 susceptibles de s'imprimer à la surface du ruban de verre 8.

En sens inverse, il est préférable de limiter la valeur de la fréquence du champ B pour obtenir une épaisseur de peau magnétique appropriée. Idéalement, elle serait limitée de manière à ce que l'épaisseur de peau magnétique soit au moins égale à la profondeur du bain de métal fondu 7 dans la zone d'application du champ B. L'épaisseur de peau magnétique est donnée par la formule :

$$\delta_m = \frac{1}{\sqrt{\pi \mu_0 \sigma f}}$$

avec :

- $\delta_m$ : épaisseur de peau magnétique,
- $\mu_0$ : la perméabilité du vide,
- $\sigma$ : la conductivité du métal fondu 7,
- f : la fréquence du champ B.

Autrement dit, pour fournir l'épaisseur de peau magnétique idéale, la fréquence du champ B est choisie inférieure ou égale à :

$$f \leq \frac{1}{\pi\mu_0\sigma h^2}$$

avec h : la profondeur en mètres du bain de métal fondu 7 dans la zone d'application du champ B.

Mais en raison du risque précédemment mentionné de créer des turbulences dans le métal fondu en raison des pulsations de forces de Lorentz, il est préférable d'opter pour un compromis entre ces deux considérations. De ce fait, la valeur de la fréquence du champ B est préférentiellement choisie pour que l'épaisseur de peau magnétique soit inférieure à la profondeur du bain de métal fondu 7 dans la zone d'application du champ B. Néanmoins, il est préférable de fixer la fréquence du champ B de manière à ce que l'épaisseur de peau magnétique soit au moins égale à 5% de la profondeur du bain de métal fondu 7 dans la zone d'application du champ B, ce qui permet d'obtenir une amélioration de la qualité optique qui est recherchée. Mais plus préférentiellement, on fixe la fréquence du champ B pour que l'épaisseur de peau magnétique soit au moins égale à 15% de la profondeur du bain de métal fondu 7 dans la zone d'application du champ B, voire au moins égale à 25% de celle-ci, voire au moins égale à 33 % de celle-ci, voire au moins 50% de celle-ci, voir au moins égale à 75% de celle-ci.

Ainsi, dans l'exemple cité plus haut, pour une profondeur du bain d'étain de 6,4 cm dans la zone d'application du champ B, la fréquence du champ B ne doit pas dépasser 7 Hz pour que l'épaisseur de peau magnétique soit au moins égale à la profondeur du bain de métal fondu dans la zone d'application du champ et une force $F_B$ d'environ 8 N.m$^{-3}$ pourra être obtenue avec un champ B de valeur efficace B. de $8.10^{-4}$ T pour un nombre de paires de pôles de p = 30. Pour éviter le risque de turbulences dans le métal fondu lié aux pulsations des forces de Lorentz, il est préférable de limiter l'épaisseur de peau magnétique en recourant par exemple à une fréquence de champ magnétique B de 50 Hz, ce qui correspond à une intensité de $3.10^{-4}$ T, ce qui correspond à une épaisseur de peau magnétique de 2.4 cm, soit plus de 37% de l'épaisseur du métal fondu depuis l'interface avec le verre.

Comme le montre cet exemple, l'intensité du champ B pourra être nettement plus faible que dans la mise en oeuvre précédente pour laquelle la vitesse de glissement $V_B$ est égale à la vitesse V d'entraînement du ruban de verre 8.

En revanche, dans cette deuxième mise en oeuvre, il est préférable de ne pas appliquer un refroidissement forcé au ruban de verre 8, étant donné que cette mesure favoriserait l'impression des turbulences qui subsistent dans le métal fondu 7.

Quel que soit la mise en oeuvre, du point de vue du dimensionnement et de l'agencement par rapport à la cuve 1 du dispositif électromagnétique 10, l'homme du métier tiendra compte le cas échéant de l'interaction du champ magnétique B et des lignes de courants induits dans le métal fondu 7 avec le matériau constitutif de la cuve 1 s'ils devaient ne pas être neutres ou négligeables.

Le dispositif électromagnétique 10 est préférentiellement agencé au-dessus du bain de métal fondu 7, mais pourrait également être placé sous la cuve 1. Par ailleurs, il est préférable que le dispositif électromagnétique 10 soit isolé thermiquement du bain et refroidi, par exemple par eau, afin d'éviter sa surchauffe. Il est avantageux que le dispositif électromagnétique 10 permette de régler la fréquence du champ B de manière à régler la vitesse de glissement $V_B$ du champ B selon les besoins. Similairement, il est avantageux que le dispositif électromagnétique 10 permette de régler l'intensité $B_e$ du champ B selon les besoins, par exemple au moyen d'un variateur de tension.

## Revendications

**1.** Procédé de fabrication de verre plat par flottage d'un ruban de verre (8) sur un bain de métal fondu (7), de préférence de l'étain fondu, dans lequel le ruban de verre (8) est entraîné suivant une direction de déplacement longitudinal (L) depuis un côté amont du bain (3) où le verre fondu est coulé en continu sur le métal fondu (7) jusqu'à un côté aval du bain (4) où le ruban de verre figé quitte le bain, le procédé comprenant :

- soumettre le métal fondu (7) à un champ magnétique (B) à composante verticale et glissant dans la direction de déplacement longitudinal (F) du ruban de verre (8) lequel champ magnétique (B) est appliqué à tout ou partie du métal fondu (7) situé sous le ruban de verre (8) dans une zone (Z) du bain pour laquelle le verre satisfait à la relation suivante :

$$10^{-3,5} \text{ Pa.m}^3.\text{s} < \mu.h^3 < 10^{-2} \text{ Pa.m}^3.\text{s}$$

avec:

- $\mu$: la viscosité du verre, et

- h : l'épaisseur du ruban de verre.

2.  Procédé selon la revendication 1, dans lequel le champ magnétique (B) est choisi de manière à réduire ou supprimer les turbulences dans le métal fondu à l'interface avec le ruban de verre dans la zone d'application du champ magnétique (B).

3.  Procédé selon la revendication 1 ou 2, dans lequel le champ magnétique (B) est choisi de manière à ce que, pour au moins une partie de l'épaisseur du métal fondu située immédiatement sous le ruban de verre dans la zone d'application du champ magnétique (B), le métal fondu soit entraîné dans la direction de déplacement longitudinale (F) du ruban de verre (8) à la même vitesse que le ruban de verre (8).

4.  Procédé selon la revendication 3, dans lequel ladite partie de l'épaisseur du métal fondu (7) située immédiatement sous le ruban de verre dans la zone d'application du champ magnétique (B) correspond à au moins 5%, plus préférentiellement au moins 15%, plus préférentiellement encore à au moins 25%, plus préférentiellement encore à au moins 33%, plus préférentiellement encore à au moins 50%, plus préférentiellement encore à au moins 66%, voire plus préférentiellement encore à au moins 75% de l'épaisseur totale de métal fondu (7) sous le ruban de verre (8) dans la zone d'application du champ (B).

5.  Procédé selon l'une quelconque des revendications 1 à 4, comprenant :

    - soumettre le métal fondu (7) audit champ magnétique (B) sur au moins 15%, plus préférentiellement sur au moins 25 %, encore plus préférentiellement sur au moins 33 %, plus préférentiellement encore sur au moins 50%, plus préférentiellement encore sur au moins 75% et plus avantageusement encore sur 100% de la longueur de ladite zone (Z) du bain mesurée dans la direction de déplacement longitudinal (L) du ruban de verre (8).

6.  Procédé selon l'une quelconque des revendications 1 à 5, comprenant :

    - soumettre le métal fondu (7) audit champ magnétique (B) sur toute la largeur du ruban du verre (8).

7.  Procédé selon la revendication 6, comprenant :

    - soumettre le métal fondu (7) audit champ magnétique (B) sur au moins toute la largeur du ruban du verre (8) sans y soumettre le métal fondu (7) dans une région contiguë au bord latéral du bain de chaque côté du ruban de verre (8).

8.  Procédé selon l'une quelconque des revendications 1 à 7, comprenant :

    - faire glisser le champ magnétique (B) dans la direction de déplacement longitudinal (L) avec une vitesse de glissement ($V_B$) qui est sensiblement égale à la vitesse de déplacement longitudinal (V) du ruban de verre (8).

9.  Procédé selon la revendication 8, comprenant en outre :

    - choisir l'intensité ($B_e$) du champ magnétique (B) de manière à entraîner le métal fondu (7) dans la direction de déplacement longitudinal (L) à la vitesse de déplacement longitudinal (V) du ruban de verre (8) pour au moins 5%, plus préférentiellement pour au moins 15%, plus préférentiellement encore pour au moins 25%, plus préférentiellement encore pour au moins 33%, plus préférentiellement encore pour au moins 50%, plus préférentiellement encore pour au moins 66 % et plus préférentiellement encore pour au moins 75% de l'épaisseur de métal fondu (7) situé immédiatement sous le ruban de verre (8) dans la zone d'application du champ magnétique (B).

10. Procédé selon la revendication 8 ou 9, comprenant en outre :

    - accélérer le refroidissement du ruban de verre (8) dans la zone d'application du champ magnétique (B).

11. Procédé selon l'une quelconque des revendications 1 à 7, comprenant :

    - faire glisser le champ magnétique dans la direction de déplacement longitudinal (L) avec une vitesse de glissement ($V_B$) sensiblement supérieure à la vitesse de déplacement longitudinal (V) du ruban de verre (8).

**12.** Procédé selon la revendication 11, dans lequel la vitesse de glissement ($V_B$) du champ magnétique (B) est choisie au moins 5 fois supérieure, plus préférentiellement au moins 10 fois supérieure, plus préférentiellement au moins 50 fois supérieure et plus préférentiellement encore au moins 100 fois supérieure à la vitesse de déplacement longitudinal (V) du ruban de verre (8).

**13.** Procédé selon la revendication 11 ou 12, comprenant :

- choisir la vitesse de glissement ($V_B$) du champ magnétique (B) dans la direction de déplacement longitudinal (L) et l'intensité ($B_e$) du champ magnétique (B) pour que, dans la zone d'application du champ magnétique (B), le métal fondu (7) soit déplacé dans la direction de déplacement longitudinal (L) sensiblement à la vitesse de déplacement longitudinal (V) du ruban de verre (8) pour au moins 5% de l'épaisseur de métal fondu (7) situé immédiatement sous le ruban de verre (8).

**14.** Procédé selon l'une quelconque des revendications 11 à 13, comprenant :

- choisir la vitesse de glissement ($V_B$) du champ magnétique (B) dans la direction de déplacement longitudinal (L) et l'intensité ($B_e$) du champ magnétique (B) pour que, dans la zone d'application du champ magnétique (B), le métal fondu (7) soit déplacé dans la direction de déplacement longitudinal (L) à une vitesse inférieure ou égale à la vitesse de déplacement longitudinal (V) du ruban de verre (8) pour toute la profondeur du bain de métal fondu (7).

**15.** Procédé selon l'une quelconque des revendications 11 à 14, dans lequel la fréquence du champ magnétique (B) est fixée de manière à ce que l'épaisseur de peau magnétique soit au moins égale à au moins 5%, plus préférentiellement à au moins 15%, plus préférentiellement encore à au moins 25%, plus préférentiellement encore à au moins 33%, plus préférentiellement encore à au moins 50% et plus avantageusement encore à 75% de la profondeur du bain de métal fondu (7) dans la zone d'application du champ magnétique (B).

**16.** Procédé selon l'une quelconque des revendications 1 à 15, comprenant le fait de générer le champ magnétique (B) au moyen d'un dispositif électromagnétique (10).

**17.** Procédé selon la revendication 16, dans lequel le dispositif électromagnétique (10) est maintenu dans une position fixe par rapport au bain de métal fondu (7) pendant l'étape de soumission du métal fondu au champ magnétique (B).

**18.** Procédé selon la revendication 16 ou 17, dans lequel le dispositif électromagnétique (10) est disposé au-dessus du bain de métal fondu (7) pendant l'étape de soumission du métal fondu au champ magnétique (B).


**Patentansprüche**

**1.** Verfahren zum Herstellen von Flachglas durch Flotation eines Glasbands (8) auf einem Bad aus geschmolzenem Metall (7), vorzugsweise aus geschmolzenem Zinn, wobei das Glasband (8) entlang einer Längsbewegungsrichtung (L) von einer stromaufwärtigen Seite des Bads (3), wo das geschmolzene Glas kontinuierlich auf das geschmolzene Metall (7) gegossen wird, bis zu einer stromabwärtigen Seite des Bads (4), wo das erstarrte Glasband das Bad verlässt, mitgeführt wird, das Verfahren umfassend:

- Aussetzen des geschmolzenen Metalls (7) gegenüber einem Magnetfeld (B) mit einer vertikalen Komponente und gleitend in die Längsbewegungsrichtung (F) des Glasbands (8), wobei das Magnetfeld (B) ganz oder teilweise auf das geschmolzene Metall (7) angelegt wird, das sich unter dem Glasband (8) in einem Bereich (Z) des Bads befindet, für den das Glas die folgende Beziehung erfüllt:

$$10^{-3,5} \text{ Pa.m}^3.\text{s} < \mu.h^3 < 10^{-2} \text{ Pa.m}^3.\text{s}$$

worin: - $\mu$: die Viskosität des Glases und
- h: die Dicke des Glasbands ist.

**2.** Verfahren nach Anspruch 1, wobei das Magnetfeld (B) gewählt wird, sodass Turbulenzen in dem geschmolzenen Metall an der Grenzfläche zu dem Glasband in dem Anwendungsbereich des Magnetfelds (B) verringert oder beseitigt werden.

3. Verfahren nach Anspruch 1 oder 2, wobei das Magnetfeld (B) gewählt wird, sodass für mindestens einen Teil der Dicke des geschmolzenen Metalls, das sich unmittelbar unter dem Glasband in dem Anwendungsbereich des Magnetfelds (B) befindet, das geschmolzene Metall in der Längsbewegungsrichtung (F) des Glasbands (8) mit der gleichen Geschwindigkeit wie das Glasband (8) mitgeführt wird.

4. Verfahren nach Anspruch 3, wobei der Teil der Dicke des geschmolzenen Metalls (7), der sich unmittelbar unter dem Glasband in dem Anwendungsbereich des Magnetfelds (B) befindet, mindestens 5 %, mehr bevorzugt mindestens 15 %, noch mehr bevorzugt mindestens 25 %, noch mehr bevorzugt mindestens 33 %, noch mehr bevorzugt mindestens 50 %, noch mehr bevorzugt mindestens 66 %, sogar noch mehr bevorzugt mindestens 75 % der Gesamtdicke des geschmolzenen Metalls (7) unter dem Glasband (8) in dem Anwendungsbereich des Felds (B) entspricht.

5. Verfahren nach einem der Ansprüche 1 bis 4, umfassend:

   - Aussetzen des geschmolzenen Metalls (7) gegenüber dem Magnetfeld (B) über mindestens 15 %, mehr bevorzugt über mindestens 25 %, noch mehr bevorzugt über mindestens 33 %, noch mehr bevorzugt über mindestens 50 %, noch mehr bevorzugt über mindestens 75 % und noch vorteilhafter über 100 % der Länge des Bereichs (Z) des Bads, gemessen in der Längsbewegungsrichtung (L) des Glasbands (8).

6. Verfahren nach einem der Ansprüche 1 bis 5, umfassend:

   - Aussetzen des geschmolzenen Metalls (7) gegenüber dem Magnetfeld (B) über die gesamte Breite des Glasbands (8).

7. Verfahren nach Anspruch 6, umfassend:

   - Aussetzen des geschmolzenen Metalls (7) gegenüber dem Magnetfeld (B) über mindestens die gesamte Breite des Glasbands (8), ohne dort das geschmolzene Metall (7) in einer Region, die an den Seitenrand des Bads auf jeder Seite des Glasbands (8) angrenzt, auszusetzen.

8. Verfahren nach einem der Ansprüche 1 bis 7, umfassend:

   - Gleiten lassen des Magnetfelds (B) in der Längsbewegungsrichtung (L) mit einer Gleitgeschwindigkeit ($V_B$), die im Wesentlichen gleich der Längsbewegungsgeschwindigkeit (V) des Glasbands (8) ist.

9. Verfahren nach Anspruch 8, ferner umfassend:

   - Wählen der Intensität ($B_e$) des Magnetfelds (B), um das geschmolzene Metall (7) in der Längsbewegungsrichtung (L) mit der Längsbewegungsgeschwindigkeit (V) des Glasbands (8) zu mindestens 5 %, noch mehr bevorzugt zu mindestens 15 %, noch mehr bevorzugt zu mindestens 25 %, noch mehr bevorzugt zu mindestens 33 %, noch mehr bevorzugt zu mindestens 50 %, noch mehr bevorzugt zu mindestens 66 % und noch mehr bevorzugt zu mindestens 75 % der Dicke des geschmolzenen Metalls (7), das sich unmittelbar unter dem Glasband (8) in dem Anwendungsbereich des Magnetfelds (B) befindet, mitzuführen.

10. Verfahren nach Anspruch 8 oder 9, ferner umfassend:

    - Beschleunigen der Abkühlung des Glasbands (8) in dem Anwendungsbereich des Magnetfelds (B).

11. Verfahren nach einem der Ansprüche 1 bis 7, umfassend:

    - Gleiten lassen des Magnetfelds in der Längsbewegungsrichtung (L) mit einer Gleitgeschwindigkeit ($V_B$), die im Wesentlichen größer als die Längsbewegungsgeschwindigkeit (V) des Glasbands (8) ist.

12. Verfahren nach Anspruch 11, wobei die Gleitgeschwindigkeit ($V_B$) des Magnetfelds (B) gewählt ist, um mindestens 5-mal größer, mehr bevorzugt mindestens 10-mal größer, mehr bevorzugt mindestens 50-mal größer und noch mehr bevorzugt mindestens 100-mal größer als die Längsbewegungsgeschwindigkeit (V) des Glasbands (8) zu sein.

**13.** Verfahren nach Anspruch 11 oder 12, umfassend:

- Wählen der Gleitgeschwindigkeit ($V_B$) des Magnetfelds (B) in der Längsbewegungsrichtung (L) und der Intensität ($B_e$) des Magnetfelds (B), damit, in dem Anwendungsbereich des Magnetfelds (B), das geschmolzene Metall (7) in der Längsbewegungsrichtung (L) im Wesentlichen mit der Längsbewegungsgeschwindigkeit (V) des Glasbands (8) über mindestens 5 % der Dicke des geschmolzenen Metalls (7), das sich unmittelbar unter dem Glasband (8) befindet, bewegt wird.

**14.** Verfahren nach einem der Ansprüche 11 bis 13, umfassend:

- Wählen der Gleitgeschwindigkeit ($V_B$) des Magnetfelds (B) in der Längsbewegungsrichtung (L) und der Intensität ($B_e$) des Magnetfelds (B), damit, in dem Anwendungsbereich des Magnetfelds (B), das geschmolzene Metall (7) in der Längsbewegungsrichtung (L) mit einer Geschwindigkeit, die kleiner als oder gleich der Längsbewegungsgeschwindigkeit (V) des Glasbands (8) ist, über die gesamte Tiefe des Bads aus geschmolzenem Metall (7) bewegt wird.

**15.** Verfahren nach einem der Ansprüche 11 bis 14, wobei die Frequenz des Magnetfelds (B) festgelegt wird, sodass die Dicke der magnetischen Haut mindestens gleich bis mindestens 5 %, mehr bevorzugt bis mindestens 15 %, noch mehr bevorzugt bis mindestens 25 %, noch mehr bevorzugt bis mindestens 33 %, noch mehr bevorzugt bis mindestens 50 % und noch vorteilhafter bis 75 % der Tiefe des Bads aus geschmolzenem Metall (7) in dem Anwendungsbereich des Magnetfelds (B) beträgt.

**16.** Verfahren nach einem der Ansprüche 1 bis 15, umfassend das Erzeugen des Magnetfelds (B) mittels einer elektromagnetischen Vorrichtung (10).

**17.** Verfahren nach Anspruch 16, wobei die elektromagnetische Vorrichtung (10) in einer festen Position relativ zu dem Bad aus geschmolzenem Metall (7), während des Schritts des Aussetzens des geschmolzenen Metalls gegenüber dem Magnetfeld (B), gehalten wird.

**18.** Verfahren nach Anspruch 16 oder 17, wobei die elektromagnetische Vorrichtung (10) über dem Bad aus geschmolzenem Metall (7), während des Schritts des Aussetzens des geschmolzenen Metalls gegenüber dem Magnetfeld (B), angeordnet ist.

## Claims

**1.** A process for manufacturing flat glass by floating a glass ribbon (8) on a bath of molten metal (7), preferably molten tin, in which the glass ribbon (8) is drawn in a direction of longitudinal movement (L) from an upstream side of the bath (3) where the molten glass is continuously poured onto the molten metal (7) to a downstream side of the bath (4) where the set glass ribbon leaves the bath, the process comprising:

- subjecting the molten metal (7) to a magnetic field (B) having a vertical component and that slides in the direction of longitudinal movement (F) of the glass ribbon (8), which magnetic field (B) is applied to all or some of the molten metal (7) located under the glass ribbon (8) in a zone (Z) of the bath for which the glass satisfies the following relationship:

$$10^{-3.5}\ \mathrm{Pa.m^3.s} < \mu.h^3 < 10^{-2}\ \mathrm{Pa.m^3.s}$$

with:

- $\mu$: the viscosity of the glass, and
- h: the thickness of the glass ribbon.

**2.** The process as claimed in claim 1, wherein the magnetic field (B) is chosen so as to decrease or prevent turbulence in the molten metal at the interface with the glass ribbon in the zone of application of the magnetic field (B).

**3.** The process as claimed in claim 1 or 2, wherein the magnetic field (B) is chosen so that, for at least one portion of the thickness of the molten metal, which portion is located immediately under the glass ribbon in the zone of application of the magnetic field (B), the molten metal is drawn in the longitudinal direction of movement (F) of the glass ribbon (8) at the same speed as the glass ribbon (8).

4. The process as claimed in claim 3, wherein said portion of the thickness of the molten metal (7) located immediately under the glass ribbon in the zone of application of the magnetic field (B) corresponds to at least 5%, more preferably to at least 15%, even more preferably to at least 25%, even more preferably to at least 33%, even more preferably to at least 50%, even more preferably to at least 66%, or yet even more preferably to at least 75% of the total thickness of molten metal (7) under the glass ribbon (8) in the zone of application of the field (B).

5. The process as claimed in any one of claims 1 to 4, comprising:

   - subjecting the molten metal (7) to said magnetic field (B) over at least 15%, more preferably over at least 25%, even more preferably over at least 33%, even more preferably over at least 50%, even more preferably over at least 75% and yet more advantageously over 100% of the length of said zone (Z) of the bath, measured in the direction of longitudinal movement (L) of the glass ribbon (8).

6. The process as claimed in any one of claims 1 to 5, comprising:

   - subjecting the molten metal (7) to said magnetic field (B) over all the width of the glass ribbon (8) .

7. The process as claimed in claim 6, comprising:

   - subjecting the molten metal (7) to said magnetic field (B) over at least all the width of the glass ribbon (8) without subjecting thereto the molten metal (7) in a region contiguous to the lateral edge of the bath on each side of the glass ribbon (8).

8. The process as claimed in any one of claims 1 to 7, comprising:

   - making the magnetic field (B) slide in the direction of longitudinal movement (L) with a slide speed ($V_B$) that is substantially equal to the speed of longitudinal movement (V) of the glass ribbon (8).

9. The process as claimed in claim 8, furthermore comprising:

   - choosing the strength ($B_e$) of the magnetic field (B) so as to draw the molten metal (7) in the direction of longitudinal movement (L) at the speed of longitudinal movement (V) of the glass ribbon (8) as regards at least 5%, more preferably as regards at least 15%, even more preferably as regards at least 25%, even more preferably as regards at least 33%, even more preferably as regards at least 50%, even more preferably as regards at least 66% and even more preferably as regards at least 75% of the thickness of molten metal (7) located immediately under the glass ribbon (8) in the zone of application of the magnetic field (B).

10. The process as claimed in claim 8 or 9, furthermore comprising:

    - accelerating the cooling of the glass ribbon (8) in the zone of application of the magnetic field (B).

11. The process as claimed in any one of claims 1 to 7, comprising:

    - making the magnetic field slide in the direction of longitudinal movement (L) with a slide speed ($V_B$) substantially higher than the speed of longitudinal movement (V) of the glass ribbon (8).

12. The process as claimed in claim 11, wherein the speed ($V_B$) at which the magnetic field (B) is slid is chosen to be at least 5 times higher, more preferably at least 10 times higher, more preferably at least 50 times higher and even more preferably at least 100 times higher than the speed of longitudinal movement (V) of the glass ribbon (8).

13. The process as claimed in claim 11 or 12, comprising:

    - choosing the speed ($V_B$) at which the magnetic field (B) is slid in the direction of longitudinal movement (L) and the strength ($B_e$) of the magnetic field (B) so that, in the zone of application of the magnetic field (B), the molten metal (7) is moved in the direction of longitudinal movement (L) substantially at the speed of longitudinal movement (V) of the glass ribbon (8) as regards at least 5% of the thickness of molten metal (7) located immediately under the glass ribbon (8).

14. The process as claimed in any one of claims 11 to 13, comprising:

- choosing the speed ($V_B$) at which the magnetic field (B) is slid in the direction of longitudinal movement (L) and the strength ($B_e$) of the magnetic field (B) so that, in the zone of application of the magnetic field (B), the molten metal (7) is moved in the direction of longitudinal movement (L) at a speed lower than or equal to the speed of longitudinal movement (V) of the glass ribbon (8) as regards all the depth of the bath of molten metal (7) .

15. The process as claimed in any one of claims 11 to 14, wherein the frequency of the magnetic field (B) is set so that the magnetic skin depth is at least equal to at least 5%, more preferably to at least 15%, even more preferably to at least 25%, even more preferably to at least 33%, even more preferably to at least 50% and yet more advantageously to 75% of the depth of the bath of molten metal (7) in the zone of application of the magnetic field (B).

16. The process as claimed in any one of claims 1 to 15, comprising the fact of generating the magnetic field (B) by means of an electromagnetic device (10).

17. The process as claimed in claim 16, wherein the electromagnetic device (10) is held in a fixed position with respect to the bath of molten metal (7) during the step of subjecting the molten metal to the magnetic field (B) .

18. The process as claimed in claim 16 or 17, wherein the electromagnetic device (10) is placed above the bath of molten metal (7) during the step of subjecting the molten metal to the magnetic field (B).

Fig.1

Fig.2

Fig.3

Fig.4

Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 304844 A2
- US 2010206009 A1
- DE 102007014806 A1